Europäisches Patentamt

European Patent Office

Office européen des brevets

(11) Publication number: **0 059 590**
**B1**

(12) # EUROPEAN PATENT SPECIFICATION

(45) Date of publication of patent specification: **13.11.85**

(51) Int. Cl.⁴: **B 07 C 5/36, F 16 K 31/06**

(21) Application number: **82300915.4**

(22) Date of filing: **23.02.82**

(54) **An improved pressurized fluid jetting device for apparatus for sorting granular materials according to colour.**

(30) Priority: **26.02.81 JP 29114/81**

(43) Date of publication of application:
**08.09.82 Bulletin 82/36**

(45) Publication of the grant of the patent:
**13.11.85 Bulletin 85/46**

(84) Designated Contracting States:
**CH DE FR IT LI NL**

(56) References cited:
**FR-A-2 445 185**
**GB-A- 615 997**
**GB-A- 885 284**
**US-A-2 860 850**
**US-A-3 179 247**

(73) Proprietor: **SATAKE ENGINEERING CO., LTD.**
**19-10, Ueno 1-chome**
**Taito-ku Tokyo 110 (JP)**

(72) Inventor: **Satake, Toshihiko**
**2-38 Saijonishihonmachi**
**Higashi-Hiroshima-shi (JP)**

(74) Representative: **Hayward, Denis Edward Peter**
**et al**
**Lloyd Wise, Tregear & Co. Norman House**
**105-109 Strand**
**London WC2R OAE (GB)**

Courier Press, Leamington Spa, England.

## Description

The present invention relates generally to sorting apparatus for sorting granular materials according to their colours and, more particularly, to an improved pressurized fluid jetting device for use in sorting apparatus of the kind described.

Sorting apparatus adapted to sort granular materials of different colours according to their colours is known. This conventional apparatus incorporates a device for jetting a pressurized fluid to selectively blow unwanted grains out of the main stream of grains. The pressurized fluid jetting device comprises a cup-shaped cylindrical main body in which is provided a passage for the pressurized fluid, and solenoid means surrounding the passage. The bottom end wall of the cup-shaped main body constitutes a pressure receiving surface. A cap member provided with an apertured valve seat is detachably fixed to the main body at the cup bottom end. A valve plate is loosely fitted between the valve seat member and the bottom end wall of the cup-shaped member. This valve plate is adapted to be moved to and fro in the axial direction of the device by the magnetic attracting force of the solenoid means and the force produced by the pressurized fluid in the fluid passage of the main body, to make contact either with the pressure receiving surface or the valve seat. In this type of sorting apparatus, the frequency of operation of the pressurized fluid jetting device is extremely high, and the magnetic attracting force of the solenoid means is considerable, so that the pressure-receiving surface struck by the valve plate is worn rapidly. The wearing down of the pressure-receiving surface causes a change in the stroke of the valve plate which in turn disturbs the action of the device for jetting the pressurized fluid, resulting in a serious deterioration of the sorting performance of the sorting apparatus. To recover the regular sorting performance, it is necessary to renew the worn down pressure-receiving surface quite frequently. However, the work of renewing the part is time-consuming and troublesome, particularly when the sorting apparatus is arranged and constructed with a plurality of sorting units side by side. In addition, this frequent maintenance operation becomes a considerable expense because the whole of the cup-shaped main body of the pressurized fluid jetting device has to be replaced.

In US—A—3,695,517 a solution is proposed whereby, instead of the valve plate being allowed to strike the comparatively soft magnetic steel of the cup-shaped body member, a hard stainless steel insert plate is provided inside the cup end and this plate has a flange which projects through and stands proud of the cup end so as to provide an annular abutment to be struck by the valve plate. This protects the end face of the cup-shaped member but there is still some wear of the annular abutment so that now the flanged stainless steel striker plate, which is quite an expensive part, has to be replaced at certain less frequent intervals and this operation is again troublesome and time-consuming because the plate itself is situated inside the cup-shaped member and the whole of the solenoid assembly and fluid passage must be withdrawn to gain access to it. Furthermore, since the comparatively soft magnetic valve plate now strikes a hard annular stainless steel surface which is of very much less area than the end face of the cup shaped member, the wear on the valve plate is greatly increased and an annular groove may be formed in it which will spoil the performance of the device unless the valve plate is renewed very often.

Accordingly, the present invention aims at overcoming the above-described problems of the prior art.

According to the invention, there is provided a pressurized fluid jetting device comprising:

solenoid means disposed around a first passage having one end thereof connectible to a source of pressurized fluid and the other end open;

a housing surrounding said solenoid means;

an end plate at the end of the housing adjacent said other open end of said first passage, said end plate having an aperture therethrough aligned with said first passage;

a valve seat member in contact with the outer face of said end plate and co-operating with the same to define between said end plate and said valve seat member a valve chamber, said valve seat member having second passage means therethrough communicating with said valve chamber;

a valve member constituting also an armature for the solenoid means movably disposed within said valve chamber and having an aperture therethrough aligned with said first passage but not aligned with said second passage means, said valve member being urged by the pressure of the pressurized fluid within said first passage against said valve seat member, when said solenoid means is de-energized, thereby to close said second passage means in said valve seat member, and said valve member being moved toward said end plate by the magnetic attraction when the solenoid means is energized, to open said second passage means and thereby place said first passage and said second passage means in communication; and

an outlet member disposed to engage said valve seat member at the face thereof remote from the valve chamber and having an outlet port for pressurized fluid passing through said second passage means, and in which said end plate which acts as a pressure-receiving plate for said valve member is made and fitted as a part separate from the housing, and the outlet member is in the form of a cap member that is detachably secured to said housing in such manner as to urge said valve seat member and said pressure receiving end plate into contact with one another and toward the said other open end of said first passage thereby to fix said pressure-receiving end plate and said valve seat member in position relatively to said housing, detachment of the cap member from said housing enabling said pressure-receiving end plate to be removed for inspection and/or replacement.

Arrangements according to the invention will now be described in more detail by way of example and with reference to the accompanying drawings in which:

Fig. 1 is a sectional view of a photoelectric sorting chamber of a granular material sorting apparatus;

Fig. 2 is a sectional side elevational view of a pressurized fluid jetting device in accordance with an embodiment of the invention; and

Fig. 3 is an exploded perspective view of the pressurized fluid jetting device as shown in Fig. 2.

Before turning to the description of the embodiment, an explanation will be made here as to the general construction of a granular material sorting apparatus in which the pressurized fluid jetting device of the invention is incorporated.

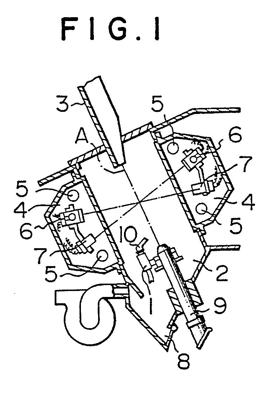

Referring to Fig. 1, granular material, containing principally grains of a desired colour and mixed therewith grains of other colours, is supplied into a photoelectric sorting chamber 2 through a grain chute 3 mounted on the sorting chamber 2. The grains flow in the sorting chamber 2 in a linear flow along a predetermined path A. A photoelectric detector chamber 4 is disposed at each side of the photoelectric sorting chamber 2. Each photoelectric detector chamber accommodates light sources 5, a light-receiving element 7 and a reference colour plate 6 all disposed as shown in the Figure. In operation, the light is applied by the light sources 5 to the grain flow passing along the path A, and the difference between the amount of light reflected or transmitted by the grain flow and the amount of light from the reference colour plate 6 in the opposite chamber 4 is detected by the light-receiving element 7 in each photoelectric detector chamber 4. The light-receiving element produces, upon detection of the presence of grains of a colour other than the principal colour, a detection signal for actuating the pressurized fluid jetting device 1 so that a pressurized fluid, which is in this case compressed air, is jetted from a nozzle 10 of the jetting device 1 to blow the grain particles of the different colour out of the predetermined path A of the grain flow. The grain particles of the different colour thus blown out of the path A are collected at the bottom of the sorting chamber 2 and are discharged through a discharge port 8. On the other hand, the grain particles of ordinary colour are allowed to flow along the path A and are discharged to the outside of the sorting apparatus through a grain collecting sleeve 9. Thus, the grains having colours different from that of the ordinary coloured grain are separated and removed from the latter.

As will be understood from the foregoing description, the pressurized fluid jetting device 1 is operated very frequently, and, in addition, very abruptly at each time of detection of grain of a different colour.

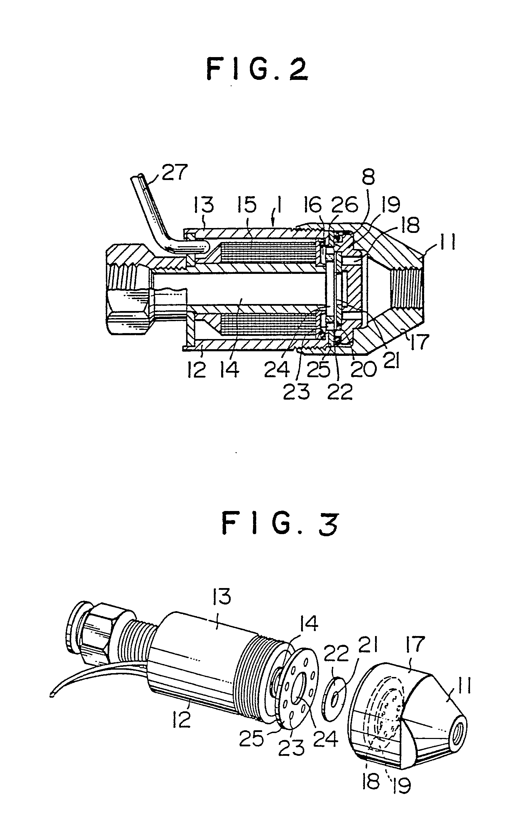

Figs. 2 and 3 show an arrangement of the pressurized fluid jetting device in accordance with a preferred embodiment of the invention. The pressurized fluid jetting device 1 has a nozzle 10 (See Fig. 1), cap member 11 and a main body 12, although the nozzle 10 is omitted from Figs. 2 and 3.

The main body 12 has a cylindrical member 13 in which is defined a fluid passage 14 surrounded by a solenoid means 15. A fluid chamber 16 is formed around the passage 14 at the outlet end of the fluid passage 14. The cap member 11 has a cylindrical skirt portion and a frustoconical head portion 17, and receives within itself a valve seat member 19 provided with a plurality of small through holes 18 disposed around a circle. A guide passage 20 is formed in the valve seat member 19. The cap member 11 is internally threaded at its front and rear end portions. The nozzle 10 (see Fig. 1) and the outlet end of the main body 12 are detachably fixed by screwing into the front and rear end portions of the cap member 11, respectively. An annular valve plate 22 is provided with a central through hole 21. A disc-shaped pressure-receiving plate 25, which is a body made separately from the main body 12, is provided with a central through hole 24 of a diameter greater than that of the aforementioned fluid passage 14, and a ring of vent holes 23 surrounding the central hole 24. The valve plate 22 loosely fits in the guide passage 20 formed in the valve seat member 19 mounted in the cap member 11. After adhering the pressure-receiving plate 25 to the outlet end of the main body 12, the cap member 11 is screwed on to the outlet end of the main body 12 with an "O" ring 8 compressed between the valve seat member 19 and the pressure-receiving plate 25. In consequence, the cap member 11 is joined with the main body 12 while thrusting against the pressure-receiving plate 25 by means of a flange 26 provided on the valve seat member 19. At the same time, the nozzle 10 is screwed into the front end of the cap member thus completing the assembly of the pressurized fluid jetting device 1.

In the assembled state of the device 1, the pressure-receiving plate 25 partially covers the fluid chamber 16 of the main body 12, with the vent holes 23 thereof communicating with the fluid chamber 16.

In operation, the fluid passage 14 is connected to a source of compressed air, and the valve plate 22 loosely fitting in the guide passage 20 in the valve seat member 19 is normally pressed against the inner surface of the valve seat member 19, as shown in Fig. 2, by the action of the compressed air, thereby closing the small through holes 18, so that the compressed air is not supplied to the nozzle 10.

When a light-receiving element 7 of the photoelectric sorting chamber 2 detects grain particles of a different colour, the element 7 produces a detection signal by which the solenoid means 15 is energized through lead wires 27. In consequence, the valve plate 22 loosely fitting in the guide passage 20 is attracted towards the pressure receiving plate 25 to make an impacting contact therewith, by the electromagnetic attracting force produced by the solenoid means 15, so that the plurality of small through holes 18 in the valve seat member 19 are opened. As a result, compressed air from the fluid passage 14 flows via the through hole 24 of the pressure receiving plate 25 and the through hole 21 of the valve plate 22 to the small through holes 18 in the valve seat member 19, and air also flows into the guide passage 20 via the fluid chamber 16 and the vent holes 23 of the pressure receiving plate 25 and thence to the small through holes 18 in the valve seat member 19 via the space around the valve plate 22. The air passing through the holes 18 is then jetted from the nozzle 10 attached to the cap member 11 to blow the detected grain particles of different colour out of the predetermined path of the grain to separate those grain particles from the ordinary grains.

When the detection signal from the light-receiving element 7 disappears, the solenoid means 15 is de-energized so that the valve plate 22, which has been attracted into contact with the pressure receiving plate 25, is moved by the pressure of the compressed air flowing in the fluid passage 14 back into contact with the inner surface of the valve seat member 19 to close the small holes 18 in the latter thereby to shut off the flow of compressed air to the nozzle 10.

This operation of the pressurized fluid jetting device 1 occurs extremely rapidly and at a high frequency of repetition, so that the contact surface of the pressure receiving plate 25 is rapidly worn down due to the striking action by the valve plate 22 caused by the powerful electromagnetic attracting force exerted by the solenoid means 15. In consequence, the stroke of the valve plate 22 becomes increased and the device no longer functions properly. In such a case, the sorting apparatus is stopped without delay, for the renewal of the pressure receiving plate 25. This can be done simply by unscrewing the cap member 11 from the main body 12 of the pressurized fluid jetting device 1. By so doing, the pressure receiving plate 25 becomes accessible and can be replaced easily with a new one. In this state, it is also possible to inspect the valve plate 22 and the valve seat member 19 in the cap member 11. If necessary, the valve plate 22 and the valve seat member 19 are renewed. After fitting these parts in the correct places, the cap member 11 is screwed back on to the main body 12 to reconnect all the parts as explained before, so that the pressurized fluid jetting device 1 is completely repaired and is ready for further duty at high efficiency.

In contrast to the conventional pressurized fluid jetting device in which the pressure receiving plate is constituted by the bottom wall of a cup-shaped cylindrical member, the pressure receiving plate in the device according to the invention is formed as a member separate from the cylindrical member constituting the main body of the device and is detachably secured to the cylindrical member by quite a simple means. It is, therefore, possible to inspect and, if necessary, renew all the various parts which are liable to be worn down by the repeated opening and closing action of the valve plate, i.e. the pressure receiving plate, the valve plate itself and the valve seat member, in an easy manner. Further, the pressurized fluid jetting device is of simple construction and the parts thereof are easy to fabricate, so that the cost of production is lowered substantially. In addition, it is possible to improve the rate of operation of the sorting apparatus while maintaining a high sorting performance.

**Claims**

1. A pressurized fluid jetting device for use in colour sorting apparatus comprising:
   solenoid means (15) disposed around a first passage (14) having one end thereof connectible to a source of pressurized fluid and the other end open;
   a housing (12) surrounding said solenoid means (15);
   an end plate (25) at the end of the housing adjacent said other open end of said first passage (14), said end plate having an aperture (24) therethrough aligned with said first passage;
   a valve seat member (19) in contact with the outer face of said end plate (25) and co-operating with the same to define between said end plate and said valve seat member a valve chamber (20), said valve seat member having second passage means (18) therethrough communicating with said valve chamber (20);
   a valve member (22) constituting also an armature for the solenoid means movably disposed within said valve chamber (20) and having an aperture (21) therethrough aligned with said first passage (14) but not aligned with said second passage means (18), said valve member being urged by the pressure of the pressurized fluid within said first passage (14) against said valve seat member, when said solenoid means (15) is de-energized, thereby to close said second passage means (18) in said valve seat member, and said valve member being moved toward said end plate by the magnetic attraction when the solenoid means (15) is energized, to open said second passage means (18) and thereby place said first passage (14) and said second passage means (18) in communication; and
   an outlet member (11) disposed to engage said valve seat member at the face thereof remote from the valve chamber and having an outlet port for pressurized fluid passing through said second passage means (18), characterised in that said end plate (25) which acts as a pressure-receiving plate for said valve member (22) is made and fitted as a part separate from the housing (12), and the outlet member (11) is in the form of a cap member that is detachably secured to said housing (12) in such manner as to urge said valve seat member (19) and said pressure receiving end plate (25) into contact with one another and toward the said other open end of said first passage (14) thereby to fix said pressure receiving end plate and said valve seat member in position relatively to said housing (12), whereby detachment of the cap member (11) from said housing enables said pressure receiving end plate to be removed for inspection and/or replacement.

2. A pressurized fluid jetting device as defined in Claim 1, wherein said housing (12) has a cylindrical wall (13) one axial end of which surrounds said other open end of said first passage, said pressure receiving end plate (25) abuts said one axial end of said cylindrical housing wall, and said outlet cap member (11) contains said valve seat member and is detachably secured to said one axial end of said cylindrical housing wall (13) so as to enclose said pressure receiving end plate (25) and said valve seat member (19) and press said pressure receiving end plate (25) against said one axial end of said cylindrical housing wall.

3. A pressurized fluid jetting device as defined in Claim 2, further comprising an annular chamber (16) defined within said cylindrical wall (13) of said housing (12) and around the said open end of said first passage (14), said annular chamber (16) being in communication with said first passage (14), and further aperture means (23) formed through said pressure receiving end plate (25) and through which said annular chamber (16) and said valve chamber (20) are in communication.

4. A pressurized fluid jetting device as defined in any preceding Claim, wherein said aperture (24) in said pressure receiving end plate (25) that is aligned with said first passage (14) has a cross-sectional area greater than the aperture (21) in said valve member (22).

5. A pressurized fluid jetting device as defined in Claim 3, or Claims 3 and 4, wherein said aperture (24) in said pressure receiving end plate (25) that is aligned with said first passage (14) is a single central aperture, and said first aperture means (23) formed through said pressure receiving end plate (25) comprises a ring of holes around said central aperture (24).

6. A pressurized fluid jetting device as defined in Claim 5, wherein said valve seat member (19) has a circular recess (20) defining said valve chamber, said valve member (22) being in the form of an annular disc the diameter of which is less than that of said recess (20) and not large enough for said valve member to close said ring of holes (23) in said pressure receiving end plate when the valve member is in contact therewith.

7. A pressurized fluid jetting device as defined in any one of Claims 2, 3, 5 and 6, or Claims 2 and 4, wherein said one axial end of said cylindrical housing wall (13) has an annular flange extending radially inwardly against which said pressure receiving end plate (25) abuts.

8. A pressurized fluid jetting device as defined in any preceding Claim, wherein said second passage means (18) in said valve seat member comprises a ring of bores.

9. A pressurized fluid jetting device as defined in any preceding Claim, wherein said outlet cap member (11) is screw-threadedly engaged with said housing (12).

**Revendications**

1. Dispositif à jet de fluide sous pression à utiliser dans un appareil de tri par couleur comprenant:

— un solénoïde (15) disposé autour d'un premier passage (14) dont une extrémité peut être reliée à une source de fluide sous pression et dont l'autre extrémité est ouverte;

— un boîtier (12) entourant ledit solénoïde (15);

— une plaque d'extrémité (25) à l'extrémité du boîtier adjacente à ladite autre extrémité ouverte dudit premier passage (14), ladite plaque d'extrémité étant traversée par un orifice (24) aligné avec ledit premier passage;

— un siège de soupape (19) en contact avec la face extérieure de ladite plaque d'extrémité (25) et coopérant avec celle-ci pour définir entre ladite plaque d'extrémité et ledit siège de soupape une chambre de soupape (20), ledit siège de soupape comportant des seconds moyens de passage (18) le traversant et communiquant avec ladite chambre de soupape (20);

— une soupape (22) constituant également une armature pour le solénoïde, disposée et mobile à l'intérieur de ladite chambre de soupape (20) et étant traversée par un orifice (21) aligné avec ledit premier passage (14) mais non aligné avec lesdits seconds moyens de passage (18), ladite soupape étant repoussée par la pression du fluide sous pression à l'intérieur dudit premier passage (14) contre ledit siège de soupape, lorsque ledit solénoïde (15) est désactivé, afin de fermer lesdits seconds moyens de passage (18) dans ledit siège de soupape, et ladite soupape étant ramenée vers ladite plaque d'extrémité par l'attraction magnétique lorsque le solénoïde (15) est activé, afin d'ouvrir lesdits seconds moyens de passage (18) et ainsi mettre en communication ledit premier passage (14) et lesdits seconds moyens de passage (18); et

— un élément de sortie (11) disposé de façon à s'emboîter dans ledit siège de soupape sur sa surface éloignée de la chambre de soupape et ayant un orifice de sortie pour le fluide sous pression traversant lesdits seconds moyens de passage (18), caractérisé en ce que ladite plaque d'extrémité (25) qui joue le rôle d'une plaque réceptrice de pression pour ladite soupape (22), est réalisée et montée en tant que pièce séparée du boîtier (12) et en ce que l'élément de sortie (11) est sous forme d'un capuchon fixé de façon amovible audit boîtier (12), de façon à repousser ledit siège de soupape (19) et ladite plaque d'extrémité réceptrice de pression (25) au contact l'un de l'autre et vers ladite autre extrémité ouverte dudit premier passage (15), afin de maintenir ladite plaque d'extrémité réceptrice de pression et ledit siège de soupape en position fixe par rapport audit boîtier (12), la séparation du capuchon (11) dudit boîtier permettant ainsi de retirer ladite plaque d'extrémité réceptrice de pression en vue de son inspection et/ou de son remplacement.

2. Dispositif à jet de fluide sous pression selon la revendication 1, caractérisé en ce que ledit boîtier (12) présente une paroi cylindrique (13) dont une extrémité axiale entoure ladite autre extrémité ouverte dudit premier passage, en ce que ladite plaque d'extrémité réceptrice de pression (25) est en butée contre ladite extrémité axiale de ladite paroi du boîtier cylindrique, et en ce que ledit capuchon (11) contient ledit siège de soupape et est fixé de façon amovible à ladite extrémité axiale de ladite paroi de boîtier cylindrique (13) de façon à envelopper ladite plaque d'extrémité réceptrice de pression (25) et ledit siège de soupape (19) et à repousser ladite plaque d'extrémité réceptrice de pression (25) contre ladite extrémité axiale de ladite paroi de boîtier cylindrique.

3. Dispositif à jet de fluide sous pression selon la revendication 2, comprenant en outre une chambre annulaire (16) définie à l'intérieur de ladite paroi cylindrique (13) dudit boîtier (12) et entourant ladite extrémité ouverte dudit premier passage (14), ladite chambre annulaire (16) étant en communication avec ledit premier passage (14), et d'autres moyens d'ouverture (23) traversant ladite plaque d'extrémité réceptrice de pression (25) et par l'intermédiaire desquels ladite chambre annulaire (16) et ladite chambre de soupape (20) sont en communication l'une avec l'autre.

4. Dispositif à jet de fluide sous pression selon l'une quelconque des revendications précédentes, caractérisé en ce que ledit orifice (24) ménagé dans ladite plaque d'extrémité réceptrice de pression (25), aligné avec ledit premier passage (14) à une section transversale supérieure à celle de l'orifice (21) de ladite soupape (22).

5. Dispositif à jet de fluide sous pression selon la revendication 3, ou les revendications 3 et 4, caractérisé en ce que ledit orifice (24) de ladite plaque d'extrémité réceptrice de pression (25) aligné avec ledit premier passage (14), est un orifice central unique, et en ce que lesdits autres moyens d'ouverture (23) traversant ladite plaque d'extrémité réceptrice de pression (25) comprennent un anneau de trous disposé autour dudit orifice central (24).

6. Dispositif à jet de fluide sous pression selon la revendication 5, caractérisé en ce que ledit siège de soupape (19) présente une cavité circulaire (20) définissant ladite chambre de soupape, ladite soupape (22) ayant la forme d'un disque annulaire dont le diamètre est inférieur à celui de ladite cavité (20) et n'est pas trop grand pour que ladite soupape ferme ledit anneau de trous (23) dans ladite plaque d'extrémité réceptrice de pression lorsque la soupape est en contact avec celle-ci.

7. Dispositif à jet de fluide sous pression selon l'une quelconque des revendications 2, 3, 5 et 6, ou selon les revendications 2 et 4, caractérisé en ce que ladite extrémité axiale de ladite paroi de boîtier cylindrique (13) présente une bride annulaire s'étendant radialement vers l'intérieur et sur laquelle vient buter ladite plaque d'extrémité réceptrice de pression (25).

8. Dispositif à jet de fluide sous pression selon l'une quelconque des revendications précédentes, caractérisé en ce que lesdits seconds moyens de passage (18) dans ledit siège de soupape sont constitués par un anneau de perforation.

9. Dispositif à jet de fluide sous pression selon l'une quelconque des revendications précédentes, caractérisé en ce que ledit capuchon de sortie (11) s'emboîte par vissage sur ledit boîtier (12).

**Patentansprüche**

1. Druckfluid-Blaseinrichtung zur Verwendung in Farbsortiervorrichtungen mit
einer Tauchmagneteinrichtung (15), die um einen ersten Durchlaß (14) herum angeordnet ist, dessen eines Ende mit einer Druckfluidquelle verbindbar und dessen anderes Ende offen ist,
einem die Tauchmagneteinrichtung (15) umgebenden Gehäuse (12),
mit einer Endplatte (25) an dem Ende des Gehäuses, welches dem anderen offenen Ende des ersten Durchlasses (14) benachbart ist, wobei die Endplatte eine hindurchgehende, mit dem ersten Durchlaß ausgerichtete Öffnung (24) aufweist,
einem Ventilsitzteil (19), das mit einer Außenseite der Endplatte (25) in Berührung steht und mit dieser zusammenwirkt, um zwischen der Endplatte und dem Ventilsitzteil eine Ventilkammer (20) zu begrenzen, wobei das Ventilsitzteil durch dieses hindurchgehende, zweite Durchlaßmittel (18) aufweist, die mit der Ventilkammer (20) in Verbindung stehen,
mit einem Ventilteil (22), welches auch einen Anker für die Tauchmagneteinrichtung bildet und innerhalb der Ventilkammer (20) angeordnet ist und eine hindurchgehende Öffnung (21) aufweist, die mit dem ersten Durchlaß (14) ausgerichtet aber nicht mit den zweiten Durchlaßmitteln ausgerichtet ist, wobie das Ventilteil durch den Druck des Druckfluids in dem ersten Durchlaß (14) gegen das Ventilsitzteil gedrückt wird, wenn die Tauchmagneteinrichtung (15) enterregt ist, um dadurch die zweiten Durchlaßmittel (18) in dem Ventilsitzteil zu schließen, und wobei das Ventilteil in Richtung zu der Endplatte durch die magnetische Anziehung bewegt wird, wenn die Tauchmagneteinrichtung (15) erregt wird, um die zweiten Durchlaßmittel (18) zu öffnen und dadurch eine Verbindung zwischen dem ersten Durchlaß (14) und den zweiten Durchlaßmitteln (18) herzustellen, und
mit einem Auslaßteil (11), welches angeordnet ist, an dem Ventilsitzteil an der von der Ventilkammer entfernten Seite anzugreifen, und welches einen Auslaßdurchgang für das Druckfluid aufweist, welches durch die zweiten Durchlaßmittel (18) hindurchgeht, dadurch gekennzeichnet, daß die Endplatte (25), welche als eine druckempfangende Platte für das Ventilteil (22) wirkt, als von dem Gehäuse (12) getrenntes Teil ausgebildet und angepaßt ist, und daß das Auslaßteil (11) die Form eines Kappenteils aufweist, welches lösbar an dem Gehäuse (12) derart befestigt wird, daß das Ventilsitzteil (19) und die druckempfangende Endplatte (25) miteinander in Berührung und in Richtung zu dem anderen offenen Ende des ersten Durchlasses (14) gedrückt werden, um dadurch die druckempfangende Endplatte und das Ventilsitzteil in ihrer Lage relativ zu dem Gehäuse (12) festzulegen, wodurch das Entfernen des Kappenteils (11) von dem Gehäuse ermöglicht, die druckempfangende Endplatte zur Untersuchung and/oder zum Austausch zu entfernen.

2. Druckfluid-Blaseinrichtung nach Anspruch 1, bei dem das Gehäuse (12) eine zylindrische Wand (13) aufweist, deren eines axiales Ende das andere offene Ende des ersten Durchlasses umgibt, die druckempfangende Endplatte (25) gegen das eine axiale Ende der zylindrischen Gehäusewand stößt und das Auslaßkappenteil (11) das Ventilsitzteil enthält und entfernbar an dem einen axialen Ende der zylindrischen Gehäusewand (13) so befestigt ist, daß die druckempfangende Endplatte (25) und das Ventilsitzteil (19) eingeschlossen werden und die druckempfangende Endplatte (25) gegen das eine axiale Ende der zylindrischen Gehäusewand gedrückt wird.

3. Druckfluid-Blaseinrichtung nach Anspruch 2, wobei diese ferner umfaßt eine ringförmige Kammer (16), die in der zylindrischen Wand (13) des Gehäuses (12) und um das offene Ende des ersten Durchlasses (14) herum festgelegt ist, wobei die ringförmige Kammer (16) mit dem ersten Durchlaß (14) in Verbindung steht, sowie weitere Öffnungsmittel (23), die durch die druckempfangende Endplatte (25) hindurchgehend ausgebildet sind und durch welche hindurch die ringförmige Kammer (16) und die Ventilkammer (20) in Verbindung stehen.

4. Druckfluid-Blaseinrichtung nach irgendeinem der vorhergehenden Ansprüche, bei der die Öffnung (24) in der druckempfangenden Endplatte (25), die mit dem ersten Durchlaß (14) ausgerichtet ist, eine größere Querschnittsfläche als die Öffnung (21) in dem Ventilteil (22) aufweist.

5. Druckfluid-Blaseinrichtung nach Anspruch 3 oder den Ansprüchen 3 und 4, bei der die Öffnung (24) in der druckempfangenden Endplatte (25), die mit dem ersten Durchlaß (14) ausgerichtet ist, eine einzige Mittelöffnung ist und wobei die weiteren Öffnungsmittel (23), die durch die druckempfangende Endplatte (25) hindurchgehend ausgebildet sind, einen Ring von Öffnungen um die Mittelöffnung (24) herum umfaßt.

6. Druckfluid-Blaseinrichtung nach Anspruch 5, bei der das Ventilsitzteil (19) eine Kreisausnehmung (20) aufweist, die die Ventilkammer festlegt, wobei das Ventilteil (22) die Form einer Ringscheibe aufweist, deren Durchmesser kleiner als derjenige der Ausnehmung (20) und für das Ventilteil nicht ausreichend groß ist, den Ring von Löchern (23) in der druckempfangenden Endplatte zu schließen, wenn das Ventilteil mit dieser in Berührung steht.

7. Druckfluid-Blaseinrichtung nach irgendeinem der Ansprüche 2, 3, 5 oder 6, oder nach den Ansprüchen 2 und 4, bei der das eine axiale Ende der zylindrischen Gehäusewand (13) einen sich radial nach innen erstreckenden Ringflansch aufweist, gegen den die druckempfangende Endplatte (25) stößt.

8. Druckfluid-Blaseinrichtung nach irgendeinem der vorhergehenden Ansprüche, bei der die zweiten Durchlaßmittel (18) in dem Ventilsitzteil einen Ring von Durchbohrungen umfassen.

9. Druckfluid-Blaseinrichtung nach irgendeinem der vorhergehenden Ansprüche, bei der das Auslaßkappenteil (11) mit dem Gehäuse (12) in Schraubgewindeeingriff steht.   .

# F I G . I

# F I G. 2

# F I G. 3